# EUROPÄISCHE PATENTSCHRIFT

(11) **EP 3 089 592 B1**
(45) Veröffentlichungstag und Bekanntmachung des Hinweises auf die Patenterteilung: **16.01.2019**
(21) Anmeldenummer: 14856797.7
(22) Anmeldetag: 30.12.2014
(51) Int. Cl.: A23B 7/005, A23B 7/024, A23B 7/04, B09B 3/00

(54) **VERFAHREN ZUR STABILISIERUNG DES ÜBERSCHUSSES AUS DER PRESSVERARBEITUNG VON OBST**
METHOD FOR STABILISING THE SURPLUS FROM THE PRESSING OF FRUIT
PROCÉDÉ DE STABILISATION DE RESTES DE FRUITS APRÈS PRESSAGE

(30) Priorität: 03.01.2014 DE 102014100032
(43) Veröffentlichungstag der Anmeldung: 09.11.2016
(73) Patentinhaber: Tomasi, Werner, 84028 Landshut (DE)
(72) Erfinder: Tomasi, Werner, 84028 Landshut (DE)
(74) Vertreter: Limbeck, Achim
(86) Internationale Anmeldenummer: PCT/IB2014/003242
(87) Internationale Veröffentlichungsnummer: WO 2015/101838

(56) Entgegenhaltungen:
- EP-A2- 2 362 171
- DE-A1- 3 545 001
- DE-A1-102011 111 971
- FR-A- 987 694
- US-B2- 7 621 472

## Beschreibung

### Technisches Gebiet

Die vorliegende Erfindung betrifft ein neuartiges Verfahren zur Stabilisierung des Überschusses (Abfalls) aus der Pressverarbeitung von Obst. Stabilisierungsverfahren ändern die Gefährlichkeit der Bestandteile des Abfalls und wandeln somit gefährlichen Abfall in nicht gefährlichen Abfall um. Als stabilisiert gilt der Abfall dann, wenn nach erfolgtem Stabilisierungsverfahren kurz-, mittel- oder langfristig gefährliche Inhaltstoffe, die nicht vollständig in nicht gefährliche Inhaltstoffe umgewandelt werden, in die Umwelt abgegeben werden könnten.

### Stand der Technik

Bei herkömmlichen Verfahren zur Stabilisierung von Abfällen werden schädliche Inhaltsstoffe gefährlicher Abfälle in der Refel durch Zugabe geeigneter Additive chemisch umgesetzt (stabilisiert) und damit gefährliche in nicht gefährliche Abfälle überführt. Diese lassen sich im Erfolgsfall auf entsprechenden Deponien als Ersatzbaustoff verwerten.

Der Nachteil der chemischen Stabilisierung von Abfällen ist insbesondere darin zu sehen, dass die Stabilisierung von Abfällen als chemische Behandlung mit dem Ziel einer Stoffumwandlung anzusehen ist, die die Beseitigung des Gefährdungspotentials erreichen soll.

### Darstellung der Erfindung

Der vorliegenden Erfindung liegt die Aufgabe zu Grunde, ein Verfahren zur Stabilisierung des Überschusses (Abfalls) aus der Pressverarbeitung von Obst zu schaffen, welches die vorgenannten Nachteile ausräumt und welches die Verwendung chemischer Stoffe ausschließt und eine damit einhergehende Stoffumwandlung des Überschusses verhindert.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Stabilisierungsverfahrens sind in den abhängigen Unteransprüchenangegeben.

Die vorliegende Erfindung schließt die technische Lehre ein, dass der Obstüberschuss nach der Pressverarbeitung zur Vermeidung der Bildung von Keimlingen und Schimmelpilzen, unter anderem der Aflatoxine, mit kontrollierter Temperatur gelagert wird. Sodann werden etwaige Agglomerate oder Klumpen kalibriert, um eine homogene Größe zu erreichen, die zu besseren Ergebnissen führt, da bei unterschiedlicher Kalibrierung der Stabilisierungsvorgang nicht einwandfrei durchgeführt werden und somit eine Sterilität nicht erreicht werden kann.

Erfindungsgemäß ist das Stabilisierungsverfahren durch folgende weitere Verfahrensschritte gekennzeichnet:
a) Stabilisierungsschritt 1: Erhitzung des Obstüberschusses auf eine Temperatur zwischen 150°C und 200°C für eine Zeit zwischen 30 und 60 Minuten. Bei diesem Vorgang erreicht man die Sterilität durch das Abtöten jeglicher Mikroben, Pilzsporen oder Keimlingen.
b) Stabilisierungsschritt 2: Durchlüftung des Obstüberschusses mittels trockengefilterter Luft mit einer Temperatur zwischen -15°C und -50°C für eine Zeit zwischen 15 und 60 Sekunden. Hierbei werden die letzten Feuchtigkeitsdämpfe zur Vorbereitung des nachfolgenden Stabilisierungsschrittes 3 beseitigt.
c) Stabilisierungsschritt 3: Abkühlung des Obstüberschusses mittels trockengefilterter Eisluft mit einer Temperatur zwischen -15°C und -50°C für eine Zeit zwischen 1 Minute und 15 Minuten.

### Kurzbeschreibung der Zeichnung

Weitere Ziele, Merkmale, Vorteile und Anwendungsmöglichkeiten des erfindungsgemäßen Stabilisierungsverfahrens gemäß Anspruch 1 ergeben sich aus der nachfolgenden Beschreibung eines Ausführungsbeispiels anhand der Zeichnung.

### In der Zeichnung zeigt

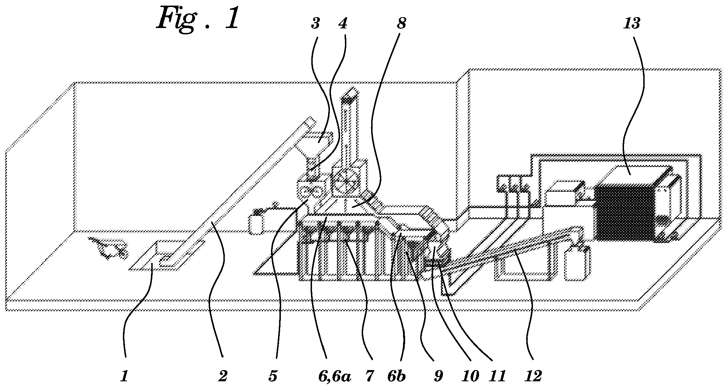

Fig.1 eine Vorrichtung zur Durchführung des erfindungsgemäßen Stabilisierungsverfahrens in einer bevorzugten Ausführungsform, in schematischer Ansicht.

### Ausführung der Erfindung

Wie aus Fig.1 ersichtlich, besteht die Vorrichtung zur Durchführung des Stabilisierungsverfahrens zunächst aus zumindest einer Lagerwanne 1 zum Aufstocken des Obstüberschusses aus der Pressverarbeitung von Obst mit kontrollierter Temperatur.

Mittels einer Beförderungsschnecke 2 wird der Obstüberschuss zu einem Einwurfstutzen 3 mit gekoppeltem Rüttler 4 und darunter befindlichen Kalibrierungsrollen 5 zum Kalibrieren des Obstüberschusses geleitet und dann auf mindestens ein - vorzugsweise mikroporöses - Förderband 6 (Förderbandabschnitte 6a,6b) übertragen.

Auf dem Förderbandabschnitt 6a wird der kalibrierte Obstüberschuss unter regulierbarer Hitze mittels einer Erhitzungseinrichtung 7 mit einer Temperatur zwischen 150°C und 200°C erhitzt, wobei der Erhitzungsvorgang für eine Zeit von 30 bis 60 Minuten stattfindet. Mittels einer Feuchtigkeitsenzugshaube 8 wird während des Erhitzungsvorgangs Feuchtigkeit abgesaugt.

In einerm weiteren Schritt wird der erhitzte und entfeuchtete Obstüberschuss an eine Abkühlungseinrichtung 9 weitergeleitet, mittels der kontrolliert trockengefilterte Luft mit einer Temperatur zwischen -15°C und -50°C für eine Zeit zwischen 15 und 60 Sekunden zugeführt und vorgekühlt wird. Mittels einer - vorzugsweise auch über diesem Förderbandabschnitt 6b angeordneten - Feuchtigkeitsentzugshaube 8 wird sämtliche Restfeuchtigkeit aus dem Obstüberschuss abgesaugt.

Der bis hierher verarbeitete Obstüberschuss wird mittels des Förderbands 6 nun in einer Auffangvorrichtung 10 mittels doppelschichtigem Abkühlungsvorgang gekühlt und gelangt anschließend in einen Ladebehälter 11, wo er mittels einer Beförderungsschnecke 12 mit integriertem Abkühlungssystem auf eine Temperatur zwischen -15°C und -50°C, für eine Zeit zwischen 1 Minute und 10 Minuten völlig abgekühlt wird. Zur Abkühlung des Beförderungsschneckenabschnitts 12 ist eine Eislüftungsanlage 13 vorgesehen.

Die Vorteile des Verfahrens zur Stabilisierung des Überschusses aus der Pressverarbeitung von Obst sind in drei Gruppen aufzuteilen:
1. Bei der Verarbeitung von giftigem Biomüll können sich im Rohzustand nach der Pressverarbeitung unter den richtigen Gegebenheiten sogenannte "Aflatoxine" bilden, (Aspergillus), wobei hier mindestens 20 natürlich vorkommende Aflatoxine unterschieden werden, die alle für den Mensch als sehr gefährlich gelten. Das Aflatoxin B1 ist damit eine der stärksten krebserzeugenden Verbindungen überhaupt. Durch das Stabilisierungsverfahren der Überschüsse aus der Pressverarbeitung von Obst können diese "Aflatoxine" gar nicht zu Stande kommen und das Endprodukt gilt so als steril und stabil.
2. Durch das Stabilisierungsverfahren des Überschusses aus der Pressverarbeitung von Obst wird ein Grundprodukt erzeugt, das in vielen Gebieten eingesetzt werden kann und viele positive Eigenschaften besitzt: Sterilität, Stabilität, fehlende Entflammbarkeit, angenehmer Geruch, etc.
3. Durch ein weiteres Verfahren kann aus dem Grundprodukt und deren Verarbeitungsreste Energie erzeugt und so der Gebrauchskreislauf komplett geschlossen werden.

Das Verfahren zur Stabilisierung des Überschusses aus der Pressverarbeitung von Obst kann zu einem Grundprodukt verwendet werden, das vorwiegend im Bauwesen Verwendung findet, bspw. als Dämmschüttung oder Auffüllung für Isolationswände. Weitere Einsatzgebiete sind ebenfalls möglich. Gegenüber dem häufig verwendeten Korkgranulat weisen die Grundprodukte dann folgende Vorteile auf: keine Entflammbarkeit, stark an Strukturstabilität, kein Volumenverlust und belastbar. Gegenüber Holzfasern, welche nur in Plattenform erhältlich sind, ergeben sich neben den genannten folgende Vorteile: keine chemischen Bestandteile (Verbundstoffe), geringe bis keine Rauchbildung.

### Liste der Bezugsziffern

- 1: Lagerwanne
- 2: Beförderungsschnecke
- 3: Einwurfstutzen
- 4: Rüttler
- 5: Kalibrierungsrollen
- 6: Förderband
- 6a,6b: Förderbandabschnitte
- 7: Erhitzungseinrichtung
- 8: Feuchtigkeitsentzugshaube
- 9: Abkühlungseinrichtung
- 10: Auffangvorrichtung
- 11: Ladebehälter
- 12: Beförderungsschnecke
- 13: Eislüftungsanlage

## Patentansprüche

1. Verfahren zur Stabilisierung des Überschusses aus der Pressverarbeitung von Obst, wobei der Obstüberschuss nach der Pressverarbeitung zur Vermeidung der Bildung von Keimlingen und Schimmelpilzen, unter anderem der Aflatoxine, mit kontrollierter Temperatur gelagert wird und sodann etwaige Agglomerate oder Klumpen kalibriert werden,
**gekennzeichnet durch** folgende Verfahrenschritte:
a) Stabilisierungsschritt 1: Erhitzung des Obstüberschusses auf eine Temperatur zwischen 150°C und 200°C für eine Zeit zwischen 30 und 60 Minuten, um Sterilität durch das Abtöten jeglicher Mikroben, Pilzsporen oder Keimlingen zu erreichen;
b) Stabilisierungsschritt 2: Durchlüftung des Obstüberschusses mittels trockengefilterter Luft mit einer Temperatur zwischen -15°C und -50°C für eine Zeit zwischen 15 und 60 Sekunden, um zur Vorbereitung des nachfolgenden Stabilisierungsschrittes 3 die letzten Feuchtigkeitsdämpfe zu beseitigen;
c) Stabilisierungsschritt 3: Abkühlung des Obstüberschusses mittels trockengefilterter Eisluft mit einer Temperatur zwischen -15°C und -50°C für eine Zeit zwischen 1 Minute und 15 Minuten.

## Claims

1. A method of stabilizing fruit remains after pressing, of which the rest of the fruits after pressing will be stored under a controlled temperature to prevent the formation of germs and molds, including aflaloxins. Then any agglomerates or lumps will be calibrated.
Characterized with the following steps:
a) Stabilization step 1: Heating the leftover fruit at a temperature between 150 °C and 200 °C for a period of 30 to 60 minutes. With this procedure sterility can be achieved by destroying all microbes, fungal spores or germs.
b) Stabilization step 2: Aeration of the remaining fruit with dry air and filtered at a temperature between -15 °C and -50 °C for a period of 15 to 60 seconds. During this time the last moisture vapors are removed in order to prepare the next step.
c) Stabilization step 3: Refrigeration of the remaining fruit with dry, filtered and iced air at a temperature between -15 °C and -50 °C for a period of 1 and 15 minutes.

## Revendications

1. Procédé de stabilisation de restes des fruits après le pressage, dont lequel le reste des fruits après le pressage sera stocké sous une température contrôlée pour éviter la formation de de germes et de moisissures, entre autres d'aflatoxines. Puis des agglomérats ou des grumeaux éventuels seront calibrés.
Caractérisé avec les étapes suivantes :
a) Étape de stabilisation 1 : Chauffage des restes de fruits à une température entre 150°C et 200°C pour une période de 30 à 60 minutes. Avec cette procédure une stérilité peut être obtient en détruisant tous les microbes, spores fongiques ou germes.
b) Étape de stabilisation 2 : Aération du reste de fruits avec de l'air sec et filtré à une température entre -15°C et -50°C pour une période de 15 à 60 secondes. Pendant ce temps les dernières vapeurs d'humidité sont éliminées afin de préparer l'étape suivante.
c) Étape de stabilisation 3 : Réfrigération du reste de fruits avec de l'air sec, filtré et glacé à une température entre -15°C et -50°C pour une période de 1 et 15 minutes.
